# EUROPEAN PATENT APPLICATION

(11) **EP 4 661 305 A1**
(43) Date of publication of application: **10.12.2025**
(21) Application number: 24766938.5
(22) Date of filing: 27.02.2024
(51) Int. Cl.: H04B 7/0456, H04B 7/06, H04W 16/14, H04W 16/28

(54) **BASE STATION, SYSTEM, AND METHOD AND PROGRAM FOR FORMING NULL FOR ANTENNA DIRECTIONALITY**

(30) Priority: 07.03.2023 JP 2023035064
(71) Applicant: SoftBank Corp., Minato-ku Tokyo 1057529 (JP)
(72) Inventor: TASHIRO Koji, Tokyo 105-7529 (JP); HOSHINO Kenji, Tokyo 105-7529 (JP); NAGATE Atsushi, Tokyo 105-7529 (JP)
(74) Representative: SSM Sandmair
(86) International application number: PCT/JP2024/006978
(87) International publication number: WO 2024/185567

(57) **Abstract**

In a base station of performing a beamforming control by using a codebook, it is to achieve a significant interference reduction effect, similar to a null forming in which a null of an antenna directivity pattern is formed toward an interference-receiving object. A base station determines plural sets of codebook subsets that are grouped by each of sets of plural precoding weight matrices corresponding to plural beams orthogonal to each other, based on a codebook, selects, from the plural sets of codebook subsets, a codebook subset consisting of a set of plural precoding weight matrices corresponding to plural beams orthogonal to each other which include an interference beam having a maximum gain in a direction of an interference-receiving object, as the codebook subset to be used for the beamforming control, and the base station stops a use of plural beams corresponding to unselected codebook subsets other than the selected codebook subset, and stops a use of the interference beam among the plural beams corresponding to the selected codebook subset, in the beamforming control.

## Description

### TECHNICAL FIELD

The present invention relates to a base station and a system for performing a beamforming control using a codebook, and a method and a program for performing a beamforming control using a codebook.

### BACKGROUND ART

Some frequency bands in radio communications are permitted for use by a plurality of radio communication systems different from each other. For example, in Japan, the 3.7 GHz band (3.6 GHz to 4.2 GHz) is permitted for use by a fifth-generation mobile communication system and for use by a downlink of a fixed satellite communication systems. In this case, there may be an occurrence of an interference from a base station of the mobile communication system to the downlink of a satellite ground station (also called an "earth station") of the fixed satellite communication system. In particular, an array antenna configured with ultra-large number of elements such as a Massive MIMO, which are used as an antenna in a base station of the mobile communication system, have a high gain and also generate a large interference power. In order to reduce such interference, an operator of installing the base station for the mobile communication system must make an interference adjustment in advance with an operator of operating a satellite ground station (interference-receiving object). For example, it is necessary to perform an interference adjustment to suppress a total interference (electric power) from all base stations located near the satellite ground station (interference-receiving object) to a predetermined reference value or less.

As a method for avoiding an interference between base stations, there is conventionally known a method for restricting a codebook used for beamforming in a base station of performing a codebook-type beamforming based on a codebook that is a set of plural precoding weight matrices corresponding to plural directional beams respectively having azimuth angles and elevation/depression angles of a base station antenna which are different from each other.

For example, Patent Literature 1 discloses an interference control method in which a transmitter side generates a basic codebook subset including at least one precoding matrix selected from a basic codebook and transmits an indicator of the basic codebook subset indicating the precoding matrix included in the basic codebook subset to a receiver side. It is disclosed that, according to the interference control method, there is an effect of improving the performance of the radio communication system, reducing an interference to adjacent cells, reducing an overhead, and the like.

Patent Literature 2 discloses a method for avoiding an inter-cell interference in a radio communication system using a codebook, in which a base station receives information for restricting use of a part of the codebook, from an adjacent cell, and the base station determines a precoding matrix indicator (PMI) of the codebook as a "restricted-PMI" that is not used by one or more terminals within the cell. It is disclosed that, according to this inter-cell interference avoidance method, it is capable of effectively avoiding an inter-cell interference.

### CITATION LIST

### PATENT LITERATURE

Patent Literature 1: Japanese Unexamined Patent Application Publication (Translation of PCT Application) No. 2012-506194.
Patent Literature 2: Japanese Unexamined Patent Application Publication (Translation of PCT Application) No. 2011-518478.

### SUMMARY OF INVENTION

### TECHNICAL PROBLEM

There is a problem that, in the above-mentioned conventional method of restricting the codebook used in the beamforming control, it is not possible to obtain a significant interference reduction effect like a null forming that forms a null of an antenna directivity pattern toward an interference-receiving object.

### SOLUTION TO PROBLEM

A base station according to an aspect of the present invention is a base station that is provided with a multi-element antenna for performing a beamforming control using a codebook consisting of a set of plural precoding weight matrices corresponding to plural candidates of beams used for performing a radio communication with a terminal in a cell, and fixedly installed on land or at sea. This base station comprises means for determining plural sets of codebook subsets that are grouped by each of sets of plural precoding weight matrices corresponding to plural beams orthogonal to each other based on the codebook, means for selecting, from the plural sets of codebook subsets, a codebook subset consisting of a set of plural precoding weight matrices corresponding to plural beams orthogonal to each other, the beams including an interference beam that has a maximum gain in a direction to an interference-receiving object, as the codebook subset to be used for the beamforming control, and means for stopping a use of plural beams corresponding to unselected codebook subsets other than the selected codebook subset, and stopping a use of the interference beam among the plural beams corresponding to the selected codebook subset, in the beamforming control.

A system according to another aspect of the present invention comprises the foregoing base station, and another base station, a satellite ground station of a satellite communication system or an antenna of a radio-astronomy observation station which is an interference-receiving object.

A system according to yet another aspect of the present invention comprises the foregoing base station, another base station, a satellite ground station of a satellite communication system or an antenna of a radio-astronomy observation station which is an interference-receiving object, and a terminal for communicating with the base station.

A method according to yet another aspect of the present invention is a method for forming a null of an antenna directivity in a base station that is provided with a multi-element antenna for performing beamforming control using a codebook consisting of a set of plural precoding weight matrices corresponding to plural candidates of beams used for performing a radio communication with a terminal in a cell, and fixedly installed on land or at sea. This method includes determining plural sets of codebook subsets that are grouped by each of sets of plural precoding weight matrices corresponding to plural beams orthogonal to each other, based on the codebook, selecting, from the plural sets of codebook subsets, a codebook subset consisting of a set of plural precoding weight matrices corresponding to plural beams orthogonal to each other, the beams including an interference beam that has a maximum gain in a direction to an interference-receiving object, as the codebook subset to be used for the beamforming control, and stopping a use of plural beams corresponding to unselected codebook subsets other than the selected codebook subset, and stopping a use of the interference beam among the plural beams corresponding to the selected codebook subset, in the beamforming control.

A program according to yet another aspect of the present invention is a program executed in a computer or processor provided in a base station that is provided with a multi-element antenna for performing a beamforming control using a codebook consisting of a set of plural precoding weight matrices corresponding to plural candidates of beams used for performing a radio communication with a terminal in a cell, and fixedly installed on land or at sea. This program includes a program code for determining plural sets of codebook subsets that are grouped by each of sets of plural precoding weight matrices corresponding to plural beams orthogonal to each other, based on the codebook, a program code for selecting, from the plural sets of codebook subsets, a codebook subset consisting of a set of plural precoding weight matrices corresponding to plural beams orthogonal to each other, the plural beams including an interference beam that has a maximum gain in a direction to an interference-receiving object, as the codebook subset to be used for the beamforming control, and a program code for stopping a use of plural beams corresponding to unselected codebook subsets other than the selected codebook subset, and stopping a use of the interference beam among the plural beams corresponding to the selected codebook subset, in the beamforming control.

In the foregoing base station, the foregoing system, the foregoing method and the foregoing program, the codebook may be a codebook corresponding to plural candidates of beams having azimuth angles and elevation/depression angles different from each other centered on the multi-element antenna, the codebook subset may be plural sets of codebook subsets that are grouped by each of sets of plural precoding weight matrices corresponding to plural beams orthogonal to each other in an azimuth angle direction among the plural beams corresponding to the codebook, and a use of plural beams corresponding to unselected codebook subsets other than the selected codebook subset among the plural beams corresponding to the codebook may be stopped, and a use of an interference beam that has a maximum gain in a direction of an azimuth angle corresponding to an interference-receiving object among the plural beams corresponding to the selected codebook subset may be stopped, in the beamforming control.

In the foregoing base station, the foregoing system, the foregoing method and the foregoing program, the codebook may be a codebook corresponding to plural candidates of beams having azimuth angles and elevation/depression angles different from each other centered on the multi-element antenna, the codebook subset may be plural sets of codebook subsets that are grouped by each of sets of plural precoding weight matrices corresponding to plural beams orthogonal to each other in an elevation/depression angle direction among the plural beams corresponding to the codebook, and a use of plural beams corresponding to unselected codebook subsets other than the selected codebook subset among the plural beams corresponding to the codebooks may be stopped, and a use of an interference beam that has a maximum gain in a direction of an elevation/depression angle corresponding to an interference-receiving object among the plural beams corresponding to the selected codebook subset may be stopped, in the beamforming control.

In the foregoing base station, the foregoing system, the foregoing method and the foregoing program, the codebook may be a codebook corresponding to plural candidates of beams having azimuth angles and elevation/depression angles different from each other centered on the multi-element antenna, the codebook subsets may be plural sets of codebook subsets that are grouped by each of sets of plural precoding weight matrices corresponding to plural beams orthogonal to each other in an azimuth angle direction and an elevation/depression angle direction among the plural beams corresponding to the codebook, and a use of plural beams corresponding to unselected codebook subsets other than the selected codebook subset among the plural beams corresponding to the codebook may be stopped, and a use of an interference beam that has a maximum gain in directions of an azimuth angle and an elevation/depression angle corresponding to an interference-receiving object among the plural beams corresponding to the selected codebook subset may be stopped, in the beamforming control.

In the foregoing base station, the foregoing system, the foregoing method and the foregoing program, the interference-receiving object may be a satellite ground station of a satellite communication system. The interference-receiving object may be another base station disposed in a neighboring country adjacent to the country in which the foregoing base station is disposed, or a satellite ground station of a satellite communication system disposed in the neighboring country. The interference-receiving object may be an antenna of a radio-astronomy observation station.

The foregoing program for determining the plural sets of codebook subsets, selecting the codebook subset and stopping the use of the beam includes a trained model used for machine learning.

### ADVANTAGEOUS EFFECTS OF INVENTION

According to the present invention, in a base station of performing a beamforming control using a codebook, a significant interference reduction effect can be obtained, such as a null forming which forms a null of an antenna directivity pattern toward an interference-receiving object.

### BRIEF DESCRIPTION OF DRAWINGS

[FIG. 1A] FIG. 1A is a diagram showing an example of plural beams in a horizontal plane, which are candidates for beamforming control in a codebook in a terrestrial cell base station according to an embodiment.
[FIG. 1B] FIG. 1B is respectively a diagram showing an example of plural beams in a vertical plane, which are candidates for beamforming control in the codebook in the terrestrial cell base station according to the embodiment.
[FIG. 2A] FIG. 2A is an illustration showing an example of codebook restriction in a comparative reference example.
[FIG. 2B] FIG. 2B is an illustration showing an example of codebook restriction in the comparative reference example.
[FIG. 3] FIG. 3 is a diagram showing an example of a codebook restriction in the terrestrial cell base station according to the embodiment.
[FIG. 4A] FIG. 4A is a diagram showing an example of reducing an interference to a satellite ground station by a horizontal codebook restriction of the embodiment.
[FIG. 4B] FIG. 4B is a diagram showing an example of reducing an interference to a satellite ground station by a vertical codebook restriction of the embodiment.
[FIG. 5] FIG. 5 is a diagram showing an example of reducing an interference between neighboring countries by the vertical codebook restriction of the embodiment.
[FIG. 6] FIG. 6 is a diagram showing an example of an arrangement of plural candidates of beams in an azimuth angle direction and an elevation/depression angle direction in the beamforming control using the codebook of the embodiment.
[FIG. 7] FIG. 7 is a diagram showing an example of peak angles of plural beams in the azimuth angle direction of FIG. 6.
[FIG. 8] FIG. 8 is a diagram showing an example of a beam distribution before applying the codebook restriction in the beamforming control using the codebook of the embodiment.
[FIG. 9] FIG. 9 is a diagram showing an example of beams subject to stop of use and peak azimuth angles corresponding to those beams in the codebook restriction of the comparative reference example.
[FIG. 10] FIG. 10 is a diagram showing an example of a beam distribution when the codebook restriction in FIG. 9 is performed.
[FIG. 11] FIG. 11 is a diagram showing an example of beams subject to stop use and azimuth angles of nulls corresponding to those beams in the codebook restriction of the embodiment.
[FIG. 12] FIG. 12 is a diagram showing an example of the beam distribution for each of the orthogonal groups 1 to 4 of plural codebook subsets that can be selected by the beamforming control of the embodiment.
[FIG. 13] FIG. 13 is a diagram showing an example of the beam-use stopping in the orthogonal group 2 of the codebook subset selected in the embodiment.
[FIG. 14] FIG. 14 is a functional block diagram showing an example of a main configuration of the terrestrial cell base station according to the embodiment.

### DESCRIPTION OF EMBODIMENTS

Hereinafter, embodiments of the present invention are described with reference to the drawings.

A base station according to an embodiment described in the present specification is a terrestrial cell base station (hereinafter also referred to as a "terrestrial base station") that has a multi-element antenna (for example, an array antenna such as a Massive MIMO configured with ultra-multi elements) for performing a beamforming control using a codebook consisting of a set of plural precoding weight matrices corresponding to candidates for plural directional beams (hereinafter also simply referred to as "beams") used for radio communications with terminals in a terrestrial cell, and is fixedly installed on land or at sea. The terrestrial base station of the present embodiment determines plural sets of codebook subsets by focusing on the orthogonality of plural beam candidates in a beamforming control defined by the codebook, selects a specific codebook subset from the plural sets of codebook subsets as a target to be used, and further stops the use of the beam (interference beam) that has a maximum gain in a direction to an interference-receiving object (for example, a satellite ground station of a satellite communications system, a satellite ground station or terrestrial base station in a neighboring country, or an antenna of a radio-astronomy observation station) among the plural beams in the selected codebook subset. Thereby, it is capable of obtaining a significant interference reduction effect, similar to a null forming in which a null of an antenna directivity pattern is formed toward the interference-receiving object, with respect to an interference to the interference-receiving object (for example, a satellite ground station, a terrestrial base station, etc.) due to the beams formed by the terrestrial base station.

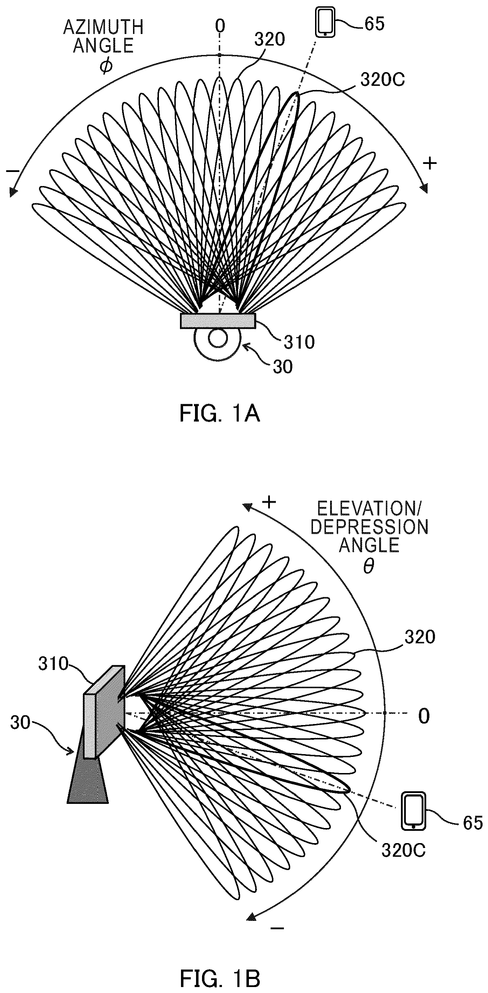

Each of FIGS. 1A and 1B is an illustration showing an example of plural beams 320 in a horizontal plane and a vertical plane, which are candidates for beamforming control by a codebook in a terrestrial base station 30 according to the embodiment. It is noted that the terrestrial base station 30 may be a configuration in which an RRH (Remote Radio Head) having a base station antenna 310 that is a multi-element antenna and a BBU (Base Band Unit) are connected via an optical line. In this case, the RRH having the base station antenna 310 is located at the location of the base station 30 in FIG. 1A and FIG. 1B. The base station antenna 310 is, for example, a planar array antenna having a flat antenna base, in which a number of antenna elements such as patch antennas are disposed in two-dimensional arrays in axial directions perpendicular to each other along the planar antenna surface of the antenna base.

A duplexing method for uplink and downlink of radio communications between the terrestrial base station 30 and a UE 65 is not limited to a specific method, and may be, for example, a Time Division Duplex (TDD) method or a Frequency Division Duplex (FDD) method. An access method for radio communications between the terrestrial base station 30 and the UE 65 is not limited to a specific method, and may be, for example, an FDMA (Frequency Division Multiple Access) method, a TDMA (Time Division Multiple Access) method, a CDMA (Code Division Multiple Access) method, or an OFDMA (Orthogonal Frequency Division Multiple Access) method.

The radio communications of service link in the terrestrial base station 30 uses a massive MIMO (Multiple-Input Multiple-Output) transmission method that has functions such as a diversity coding, a transmission beamforming and a Spatial Division Multiplexing (SDM), and performs a multi-layer transmission using an array antenna having a large number of antenna elements.

In particular, in the present embodiment, in the downlink communication from the terrestrial base station 30 to plural UEs 65 in its own cell, an MU-MIMO (Multi-User MIMO) technology is used, which transmits a signal to each of the plural different UEs 65 at the same time and with the same frequency. By performing the MU-MIMO transmission to the array antenna 310 having a large number of antenna elements by the beamforming control using the codebook, it is possible to communicate by directing an appropriate beam to each UE 65 depending on the communication environment of each UE 65, thereby improving the communication quality of the entire cell. In addition, since it is capable of communicating with plural UEs 65 using the same radio resources (time/frequency resources), the system capacity can be expanded.

The codebook used in the beamforming control in the terrestrial base station 30 of the embodiment is a set of plural precoding weight matrices corresponding to plural directional beams that have azimuth angles and elevation/depression angles from the base station antenna 310 different from each other. For example, in the 3GPP (3rd Generation Partnership Project) that is one of the international standardization organizations for mobile communications, a codebook on the basis of the Discrete Fourier Transform (DFT) is adopted.

Herein, an "azimuth angle" φ of the directional beam of the base station antenna 310 is an angle of the beam direction when the directional beam is projected on a horizontal plane passing through the center of the base station antenna 310 based on a specific direction centered on the base station antenna 310. The foregoing specific direction is, for example, a direction obtained by projecting a direction perpendicular to the antenna plane of the base station antenna 310 onto the horizontal plane. An "elevation/depression angle" θ of the directional beam of the base station antenna 310 is an up/down directional angle of the directional beam based on the horizontal direction centered on the base station antenna 310, in a vertical plane passing through the center of the base station antenna 310 and the direction of the directional beam. The plus side angle of the elevation/depression angle θ is also called as an elevation angle, and the minus side angle of the elevation/depression angle θ is also called as a depression angle.

In the beamforming control using the codebook, for example, the terminal 65, which is the user apparatus, notifies the terrestrial base station 30 of a Precoding Matrix Indicator (PMI) that is a designation information (index) designating a precoding matrix corresponding to the beam optimal for the own terminal 65, based on a channel-estimation result between the base station and the user. The terrestrial base station 30 selects a precoding weight matrix corresponding to the beam 320C notified by the user's terminal 65, and communicates with the terminal 65 using the beam 320C formed by applying the selected precoding weight matrix.

As described above, although some frequency bands in radio communications are permitted to use in plural radio communication systems different from each other (for example, fifth-generation mobile communication systems, and fixed satellite communication systems), there may be an occurrence of an interference from the base station of the mobile communication system to the downlink of the satellite ground station of the fixed satellite communication system. In particular, the array antenna 310 configured with ultra-multi elements as in the present embodiment has a high gain and also generates a large interference power.

As a method for reducing an interference from the terrestrial base station 30 that performs the beamforming control using the codebook to the interference-receiving object (for example, the satellite ground station, the terrestrial base station, etc.), there is a method using a codebook restriction.

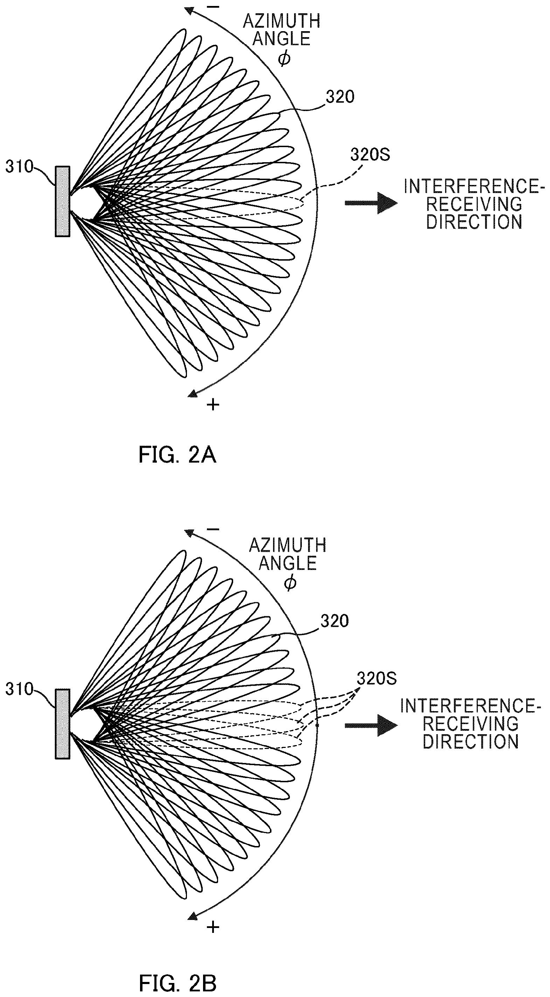

Each of FIG. 2A and FIG. 2B is an illustration showing an example of the codebook restriction corresponding to a beam in a horizontal plane (horizontal beam) in a comparative reference example. The method of FIG. 2A is a method of stopping a use of a single beam 320S, which is pointing in a direction of the interference-receiving object (hereinafter also referred to as an "interference-receiving direction"), among plural horizontal beams 320 defined in the codebook, in the beamforming control of the terrestrial base station 30. In this method, a slight interference reduction effect can be obtained by stopping the use of the beam 320S corresponding to the interference-receiving direction. However, since the side lobes of other beams 320 than the beam 320S that is stopped in use are also radiated in the interference-receiving direction, the interference reduction effect is limited. The method of FIG. 2B is a method of stopping the use of plural consecutive beams 320S, including the beam that is pointing in the direction to the interference-receiving object (interference-receiving direction) among plural horizontal beams 320 defined in the codebook, in the beamforming control of the terrestrial base station 30. In this method, interferences caused by the side lobes can be reduced by stopping the use of the plural adjacent beams 320S. However, because the side lobes cannot be completely suppressed, the interference reduction effect is limited to about several dB. In these methods using the codebook restriction in the comparative examples of FIG. 2A and FIG. 2B, it is not capable of providing a significant interference reduction effect similar to that obtained by a null forming that forms a null of the antenna directivity pattern toward the interference-receiving object.

Therefore, in the terrestrial base station 30 of the present embodiment, by using the codebook restriction that is devised to select beams to be stopped in use in the beamforming control, a significant interference reduction effect is achieved, similar to a null forming that forms a null of the antenna directivity pattern toward the interference-receiving object. Herein, the interference-receiving object is, for example, the satellite ground station 90 of the satellite communication system. The interference-receiving object may be another terrestrial base station disposed in a neighboring country adjacent to the country in which the terrestrial base station 30 is disposed, or the satellite ground station disposed in the neighboring country, or the antenna of the radio-astronomy observation station.

For example, in the radio communication system provided with the terrestrial base station 30 that utilizes a codebook-based beamforming, the use of a part of the codebook is restricted to reduce an interference of a traffic CH (channel) from the base station antenna 310 to a specific interference-receiving direction.

**In** the codebook restriction method used in the beamforming control of the present embodiment, which restricts the codebook corresponding to plural candidates of beams having azimuth angles and elevation/depression angles centered on the base station antenna (multi-element antenna) 310 which are different from each other, and the following steps (A1) to (A4) are performed.

(A1) Based on the preset codebook, plural sets of codebook subsets are determined by grouping by each of sets of plural precoding weight matrices corresponding to plural beams orthogonal to each other.

(A2) A codebook subset consisting of a set of plural precoding weight matrices corresponding to plural beams, which are orthogonal to each other and include an interference beam having a maximum gain in the direction to the interference-receiving object, is selected from the plural sets of codebook subsets, as a codebook subset to be used for the beamforming control.

(A3) In the beamforming control, the use of plural beams corresponding to unselected codebook subsets other than the selected codebook subset is stopped.

(A4) Furthermore, in the beamforming control, the use of the beam (interference beam), which has the maximum gain in the interference-receiving direction among plural beams corresponding to the selected codebook subset, is stopped.

In the horizontal codebook restriction method used in the beamforming control of the present embodiment, which restricts the codebook corresponding to plural candidates of beams having azimuth angles centered on the base station antenna (multi-element antenna) 310 which are different from each other, the following steps (B1) to (B4) are performed.

(B1) Based on the preset codebook, plural sets of horizontal codebook subsets are determined by grouping by each of sets of plural precoding weight matrices corresponding to plural beams orthogonal to each other in the azimuth angle direction.

(B2) A horizontal codebook subset consisting of a set of plural precoding weight matrices corresponding to plural beams, which are orthogonal to each other and include an interference beam having a maximum gain in the direction to the interference-receiving object, is selected from the plural sets of horizontal codebook subsets, as a horizontal codebook subset to be used for the beamforming control in the horizontal plane.

(B3) In the beamforming control in the horizontal plane, the use of plural beams corresponding to unselected codebook subsets other than the selected horizontal codebook subset is stopped.

(B4) Furthermore, in the beamforming control in the horizontal plane, the use of the beam (interference beam), which has the maximum gain in the interference-receiving direction among plural beams corresponding to the selected horizontal codebook subset, is stopped.

In the vertical codebook restriction method used in the beamforming control of the present embodiment, which restricts the codebook corresponding to plural candidates of beams having elevation/depression angles centered on the base station antenna (multi-element antenna) 310 which are different from each other, the following steps (C1) to (C4) are performed.

(C1) Based on the preset codebook, plural sets of vertical codebook subsets are determined by grouping by each of sets of plural precoding weight matrices corresponding to plural beams orthogonal to each other in the elevation/depression angle direction.

(C2) A vertical codebook subset consisting of a set of plural precoding weight matrices corresponding to plural beams, which are orthogonal to each other and include an interference beam having a maximum gain in the direction to the interference-receiving object, is selected from the plural sets of vertical codebook subsets, as a vertical codebook subset to be used for the beamforming control in the vertical plane.

(C3) In the beamforming control in the vertical plane, the use of plural beams corresponding to unselected codebook subsets other than the selected vertical codebook subset is stopped.

(C4) Furthermore, in the beamforming control in the vertical plane, the use of the beam (interference beam), which has the maximum gain in the interference-receiving direction among plural beams corresponding to the selected vertical codebook subset, is stopped.

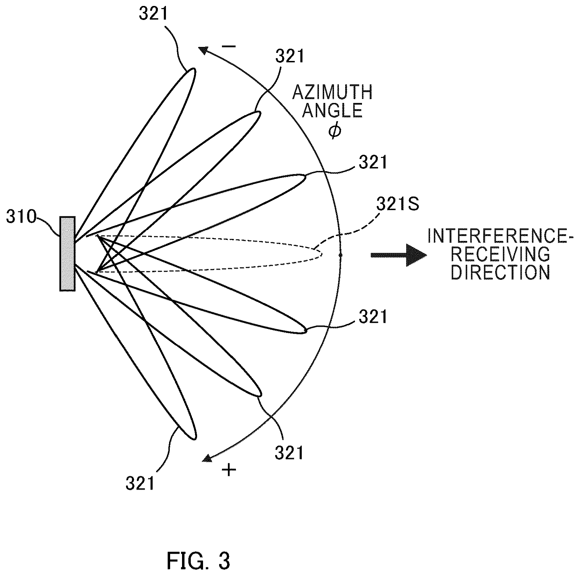

FIG. 3 is an illustration showing an example of codebook restriction in the terrestrial base station 30 according to the embodiment. In the codebook restriction method of the present embodiment, for example, as shown in FIG. 3, based on the preset codebook, a codebook subset consisting of a set of plural precoding weight matrices corresponding to plural horizontal beams 321, which are orthogonal to each other, is selected as a target codebook subset to be used in the beamforming control, and the codebook restriction is further performed to stop the use of the beam (interference beam) 321S, which has the maximum gain in the direction to the interference-receiving object, among the plural horizontal beams 321 corresponding to the selected codebook subset. By simply performing the codebook restriction in this way, a perfect null can be formed in the direction to the interference-receiving object. Although strict standards are set for the interference coordination between different carriers of telecommunications or neighboring countries as mentioned above, the terrestrial base station 30 of the present embodiment can direct the perfect null in the interference-receiving direction, thereby minimizing the giving interference.

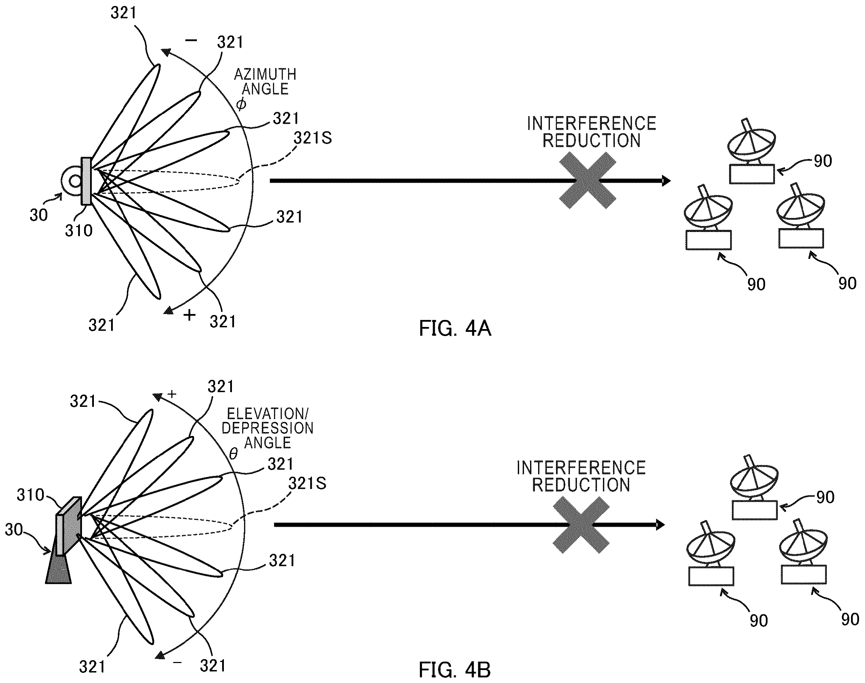

FIG. 4A is a diagram showing an example of reducing an interference to the satellite ground station 90 by the horizontal codebook restriction of the embodiment. By restricting the use of beam 321S in the azimuth angle direction in which the satellite ground station 90 is located as seen from the terrestrial base station 30 as shown in FIG. 4A, among the plural beams corresponding to the selected horizontal codebook subset, the interference reduction effect from the terrestrial base station 30 to the satellite ground station 90 can be improved.

FIG. 4B is a diagram showing an example of reducing an interference to the satellite ground station by the vertical codebook restriction of the embodiment. By restricting the use of beam 321S in the elevation/depression angle direction in which the satellite ground station 90 is located as seen from the terrestrial base station 30 as shown in FIG. 4B, among the plural beams corresponding to the selected vertical codebook subset, the interference reduction effect from the terrestrial base station 30 to the satellite ground station 90 can be improved.

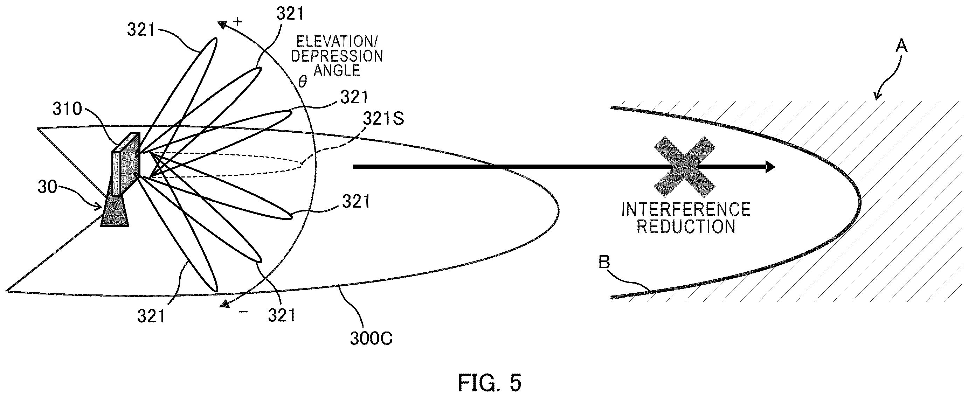

FIG. 5 is a diagram showing an example of reducing an interference between neighboring countries by the vertical codebook restriction of the present embodiment. In the case of reducing the interference between neighboring countries, by restricting the use of beam 321S in the direction with the elevation/depression angle of 0 degrees (horizontal direction) from the terrestrial base station 30 as shown in FIG. 5, among the plural beams corresponding to the selected vertical codebook subset, a wide-range and significant interference reduction effect can be obtained for the neighboring country area A outside the border line B, and a coverage hole is not occurred in the own cell 300C.

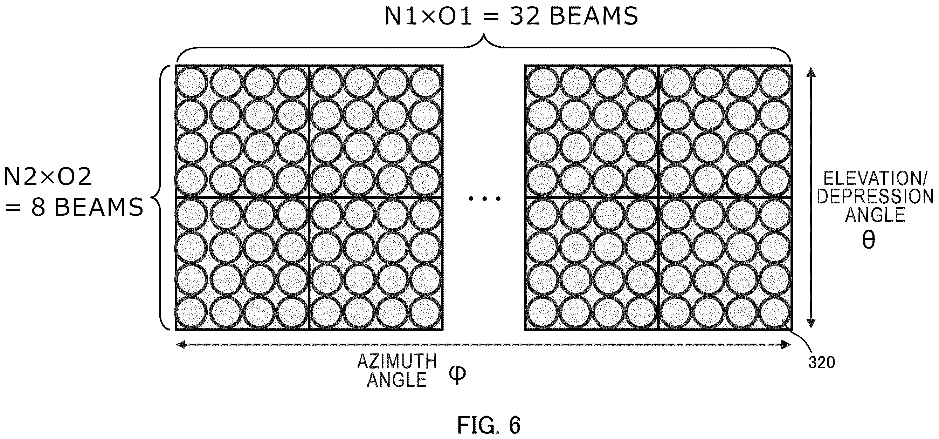

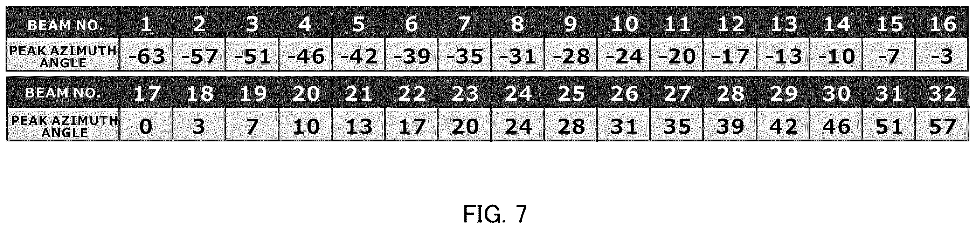

FIG. 6 is a diagram showing an example of an arrangement of plural beam candidates in the azimuth angle direction and the elevation/depression angle direction in the beamforming control using the codebook of the present embodiment. FIG. 7 is a diagram showing an example of peak angles (peak azimuth angles) of plural beams in the azimuth angle directions of FIG. 6. Table 1 shows examples of parameter values for defining plural candidates of beams (in the present example, thirty-two beams in the azimuth angle direction and eight beams in the elevation/depression angle direction for a total of 256 beams) with peak angles of each of the azimuth angle and elevation/depression angle different from each other in the codebook. The "CSI-RS port configuration" in Table 1 is a configuration of horizontal and vertical antenna ports on which information is transmitted by a channel state information-reference signal (CSI-RS). In the present example, the terrestrial base station 30 of the present embodiment can perform the beamforming control so as to form the beam, which is specified by the PMI received from the terminal 65 among candidates (see FIGS. 6 and 7) of the total of 256 beams defined by the codebook of the configuration of Table 1, toward the terminal 65.

**[Table 1]**

| | |
|---|---|
| CSI-RS port configuration (Horizontal, Vertical) | 8, 2 |
| The Number of Horizontal Elements: N1 | 8 |
| The Number of Vertical Elements: N2 | 2 |
| Horizontal Oversampling Rate: O1 | 4 |
| Vertical Oversampling Rate: O2 | 4 |

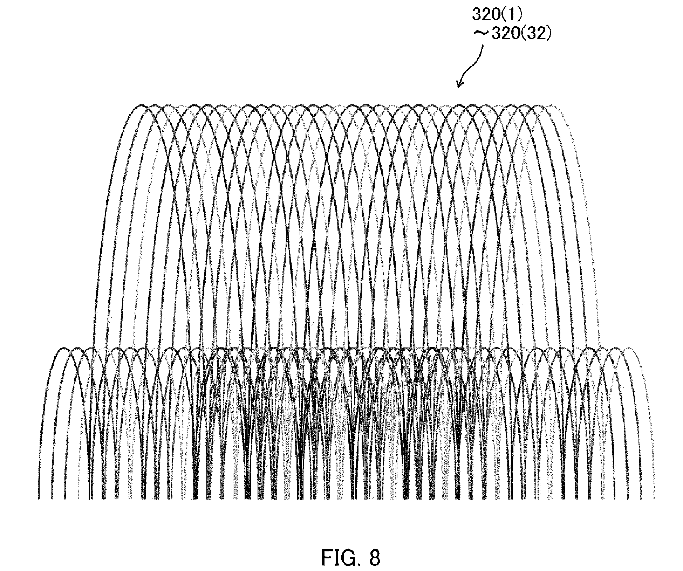

FIG. 8 is a diagram showing an example of a beam distribution before applying the codebook restriction in the beamforming control using the codebook of the present embodiment. In the example before applying the codebook restriction of FIG. 8, thirty-two beams 320(1) to 320(32) with peak angles of azimuth angle different from each other in the horizontal plane are distributed so as to partially overlap.

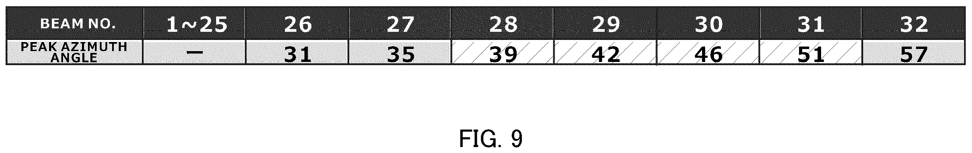

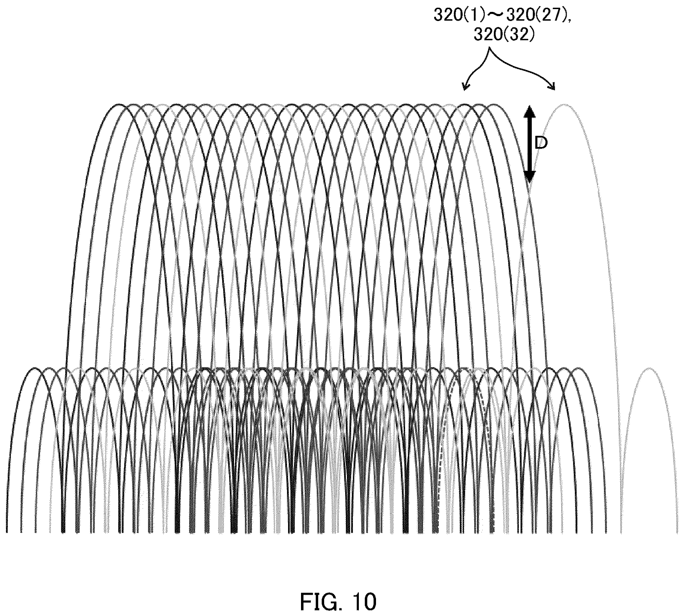

FIG. 9 is a diagram showing an example of beams subject to stop of use and peak azimuth angles corresponding to those beams in the codebook restriction of the comparative reference example. FIG. 10 is a diagram showing an example of a beam distribution when the codebook restriction in FIG. 9 is performed. In the comparative reference examples of FIGS. 9 and 10, a beamforming control is performed in the state in which the use of four consecutive beams 320(28) (beam number = 28) to 320(31) (beam number = 31) including the beam (interference beam) 320(30) (beam number = 30) that has the maximum gain in the direction to the interference-receiving object is restricted (stopped) among the thirty-two beams 320(1) to 320(32) in FIG. 8. Even if the use of the continuous beams 320(28) to 320(31) is restricted in this way, only a few dB of interference reduction effect can be obtained, as shown by the arrow width D in FIG. 10.

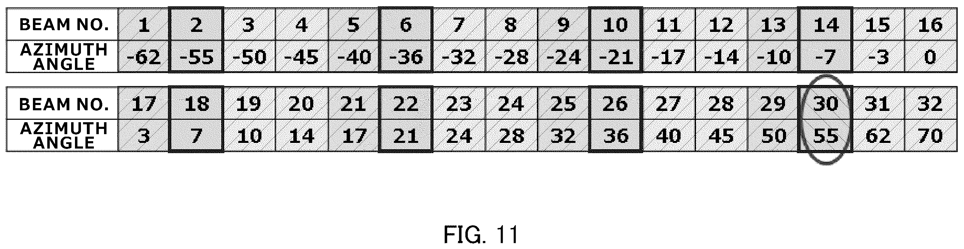

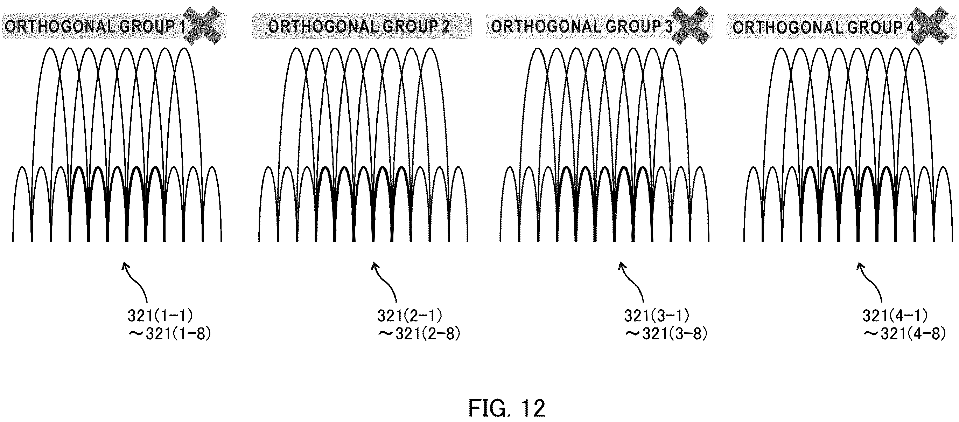

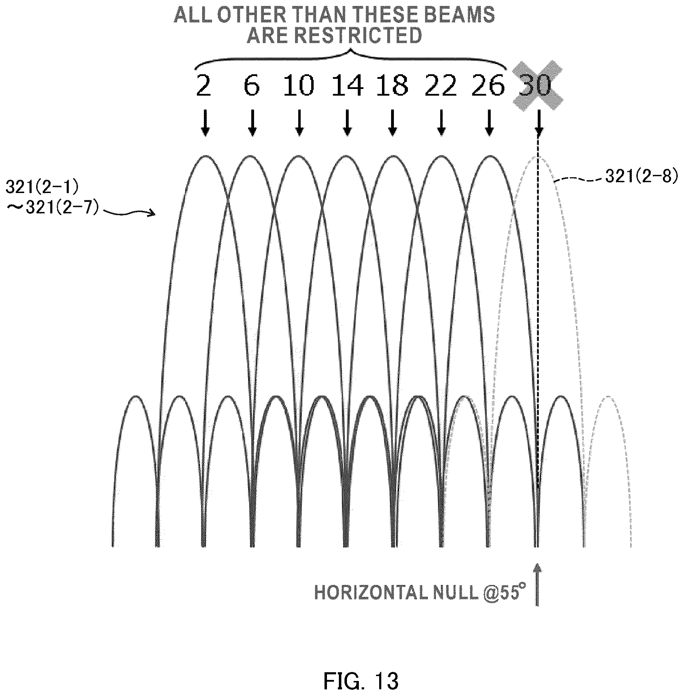

FIG. 11 is a diagram showing an example of beams subject to stop of use and azimuth angles of nulls corresponding to those beams in the codebook restriction of the present embodiment. FIG. 12 is a diagram showing an example of the beam distribution for each of the orthogonal groups 1 to 4 of plural codebook subsets that can be selected by the beamforming control of the present embodiment. FIG. 13 is a diagram showing an example of the beam-use stopping in the orthogonal group 2 of the codebook subset selected by the present embodiment. In the examples of FIGS. 11 to 13, by performing a selection of the beams to be restricted based on the orthogonality between the beams, it is achieved of a significant interference reduction by the null forming toward the interference-receiving object. In the codebook restriction method utilizing the orthogonality between the beams, the following steps (D1) to (D4) are performed.

(D1) First, based on the preset codebook, four sets of codebook subsets (see the orthogonal groups 1 to 4 in FIG. 12), which are grouped by each of sets of plural precoding weight matrices corresponding to the plural beams orthogonal to each other (in the present example, eight beams with beam numbers spaced by four), are determined.

(D2) Next, a codebook subset (orthogonal group 2 corresponding to the beams 321(2-1) to 321(2-8) in FIG. 12) consisting of a set of plural precoding weight matrices corresponding to the eight beams 320(2), 320(6), 320(10), 320(14), 320(18), 320(22), 320(26) and 320(30) orthogonal to each other, which include the beam (interference beam) 321(30) that has a maximum gain in the direction to the interference-receiving object (direction of azimuth angle 55°), is selected from the four sets of codebook subsets (orthogonal groups 1 to 4 in FIG. 12), as a codebook subset to be used for the beamforming control, as shown in FIG. 11.

(D3) Next, in the beamforming control, the use of the plural beams corresponding to unselected codebook subsets (orthogonal groups 1, 3, and 4) other than the selected codebook subset (orthogonal group 2) is stopped (restricted).

(D4) Furthermore, in the beamforming control, among the eight beams corresponding to the selected codebook subset (orthogonal group 2), the use of the beam (interference beam) 320(30) (beam 321(2-8) in FIG. 13) that has the maximum gain in the interference-receiving direction (direction of azimuth angle 55°) is stopped (restricted), and the other seven beams 320(2), 320(6), 320(10), 320(14), 320(18), 320(22) and 320(26) (beams 321(2-1) to 321(2-7) in FIG. 13) are used.

By performing the beamforming control by perming the codebook restriction in FIGS. 11 to 13, it is possible to obtain a significant interference reduction effect, similar to the null forming in which a null of the antenna directivity of the terrestrial base station 30 is formed toward the interference-receiving object (for example, the satellite ground station or the antenna of the radio-astronomy observation station located in the adjacent country or overseas) located in a specific direction (in the illustrated example, direction of azimuth angle 55°).

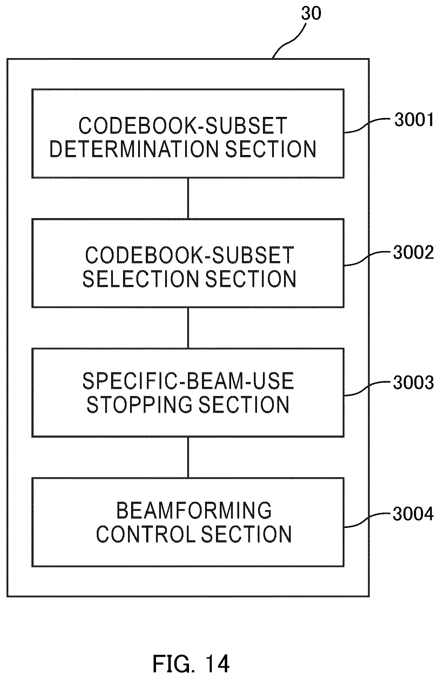

FIG. 14 is a functional block diagram showing an example of a main configuration of the terrestrial base station 30 according to the embodiment. In FIG. 14, the terrestrial base station 30 is provided with a codebook-subset determination section 3001, a codebook-subset selection section 3002, a specific-beam-use stopping section 3003 and a beamforming control section 3004. The codebook-subset determination section 3001 determines plural sets of codebook subsets in the above-mentioned (A1), (B1), (C1) or (D1). The codebook-subset selection section 3002 selects plural sets of codebook subsets in the above-mentioned (A2), (B2), (C2) or (D2). The specific-beam-use stopping section 3003 stops (restricts) the use of the specific beams in the above-mentioned (A3) and (A4), (B3) and (B4), (C3) and (C4), or (D3) and (D4). The beamforming control section 3004 performs a beamforming control based on the selected codebook subset after the use of the specific beam is stopped (restricted) by the specific-beam-use stopping section 3003 and the precoding matrix indicator (PMI) received from the terminal 65, and performs a communication with the terminal 65.

It is noted that, in the above embodiments, although it is described a case that in which there is a single interference-receiving object that receives an interference from the terrestrial base station 30, that is, it is described a case in which there is a single beam that is stopped (restricted) in use by the selected codebook subset selected by the beamforming control in the terrestrial base station 30, there may be plural interference-receiving objects. In this case of plural interference-receiving objects, the codebook restriction is performed so as to stop the use of plural beams (interference beams) that have the maximum gain in the direction to each of the plural interference-receiving objects among plural beams corresponding to the selected codebook subset. For example, in FIG. 3 described above, the codebook restriction may be performed so as to stop the use of the central beam 321S and the two beams 321 at both ends among the plural horizontal beams 321 corresponding to the selected codebook subset.

The system according to the embodiment is provided with a plurality of one or plural terrestrial base stations 30 that perform the beamforming control with the above-mentioned codebook restriction. In addition, the system according to the embodiment may be configured so as to be provided with one or plural terrestrial base stations 30 that perform the beamforming control with the above-mentioned codebook restriction, and the satellite ground station 90, the other base station or the antenna of the radio-astronomy observation station which is an interference-receiving object. Furthermore, the system according to the embodiment may be configured so as to be provided with one or plural terrestrial base stations 30 that perform the beamforming control with the above-mentioned codebook restriction, the satellite ground station 90, the other base stations or the antenna of the radio-astronomy observation station which is an interference-receiving object, and the terminal 65 that communicates with the terrestrial base station 30.

As described above, according to the present embodiment, in the terrestrial base station 30 that performs the beamforming control using the codebook, it is possible to obtain a significant interference reduction effect, similar to a null forming in which a null of the antenna directivity pattern is formed toward the interference-receiving object.

In particular, according to the present embodiment, it is possible to obtain a significant interference reduction effect, similar to a null forming in which a null of the antenna directivity of the terrestrial base station 30 is formed toward another terrestrial base stations in a neighboring country, with respect to the interference from the terrestrial base station 30 to the other terrestrial base station in the neighboring country.

Furthermore, according to the present embodiment, it is possible to obtain a significant interference reduction effect, similar to a null forming in which a null of the antenna directionality of the terrestrial base station 30 is formed toward the satellite ground station 90 or the antenna of the radio-astronomy observation station, with respect to the interference from the terrestrial base station 30 to the downlink of the satellite ground station 90 or the antenna of the radio-astronomy observation station in the country or a neighboring country.

The present invention can provide a base station, a system, a method and a program that can obtain a significant interference reduction effect, similar to the null forming in which a null of the antenna directivity of the terrestrial base station 30 is formed toward the interference-receiving object, so it is possible to contribute to achieving Goal 9 of the Sustainable Development Goals (SDGs), which is to "Create a foundation for industry and technological innovation".

It is noted that, the process steps and configuration elements of the base station of the mobile communication, the earth station of the satellite communication, the relay communication station of the communication relay apparatus, the feeder station, the gateway station, the management apparatus, the surveillance apparatus, the remote control apparatus, the server, the terminal apparatus (UE: user apparatus, mobile station, communication terminal), the base station and the base station apparatus described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, relay communication station, feeder station, gateway station, base station, base station apparatus, relay-communication station apparatus, terminal apparatus (UE: user apparatus, mobile station, communication terminal), management apparatus, monitoring apparatus, remote control apparatus, server, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like used for establishing the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

30: terrestrial base station (terrestrial cell base station)
65: terminal
90: satellite ground station
300C: cell
310: base station antenna (array antenna)
320: beam of codebook
321: beam of selected codebook subset
321S: interference beam

## Claims

1. A base station that is provided with a multi-element antenna for performing a beamforming control using a codebook consisting of a set of plural precoding weight matrices corresponding to plural candidates of beams used for performing a radio communication with a terminal in a cell, and fixedly installed on land or at sea, the base station comprising:
means for determining plural sets of codebook subsets that are grouped by each of sets of plural precoding weight matrices corresponding to plural beams orthogonal to each other, based on the codebook;
means for selecting, from the plural sets of codebook subsets, a codebook subset consisting of a set of plural precoding weight matrices corresponding to plural beams orthogonal to each other, the plural beams including an interference beam that has a maximum gain in a direction of an interference-receiving object, as the codebook subset to be used for the beamforming control; and
means for stopping a use of plural beams corresponding to unselected codebook subsets other than the selected codebook subset, and stopping a use of the interference beam among the plural beams corresponding to the selected codebook subset, in the beamforming control.

2. The base station according to claim 1,
wherein the codebook is a codebook corresponding to plural candidates of beams having azimuth angles and elevation/depression angles different from each other centered on the multi-element antenna,
wherein the codebook subset is plural sets of codebook subsets that are grouped by each set of plural precoding weight matrices corresponding to plural beams orthogonal to each other in an azimuth angle direction among the plural beams corresponding to the codebook, and
wherein the base station stops a use of plural beams corresponding to unselected codebook subsets other than the selected codebook subset among the plural beams corresponding to the codebook, and stops a use of an interference beam that has a maximum gain in a direction of an azimuth angle corresponding to an interference-receiving object among the plural beams corresponding to the selected codebook subset, in the beamforming control.

3. The base station according to claim 1,
wherein the codebook is a codebook corresponding to plural candidates of beams having azimuth angles and elevation/depression angles different from each other centered on the multi-element antenna,
wherein the codebook subset is plural sets of codebook subsets that are grouped by each set of plural precoding weight matrices corresponding to plural beams orthogonal to each other in an elevation/depression angle direction among the plural beams corresponding to the codebook, and
wherein the base station stops a use of plural beams corresponding to unselected codebook subsets other than the selected codebook subset among the plural beams corresponding to the codebooks, and stops a use of an interference beam that has a maximum gain in a direction of an elevation/depression angle corresponding to an interference-receiving object among the plural beams corresponding to the selected codebook subset, in the beamforming control.

4. The base station according to claim 1,
wherein the codebook is a codebook corresponding to plural candidates of beams having azimuth angles and elevation/depression angles different from each other centered on the multi-element antenna,
wherein the codebook subsets are plural sets of codebook subsets that are grouped by each set of plural precoding weight matrices corresponding to plural beams orthogonal to each other in an azimuth angle direction and an elevation/depression angle direction among the plural beams corresponding to the codebook, and
wherein the base station stops a use of plural beams corresponding to unselected codebook subsets other than the selected codebook subset among the plural beams corresponding to the codebook, and stops a use of an interference beam that has a maximum gain in directions of an azimuth angle and an elevation/depression angle corresponding to an interference-receiving object among the plural beams corresponding to the selected codebook subset, in the beamforming control.

5. The base station according to any one of claims 1 to 4,
wherein the interference-receiving object is a satellite ground station of a satellite communication system.

6. The base station according to any one of claims 1 to 4,
wherein the interference-receiving object is another base station disposed in a neighboring country adjacent to the country in which the foregoing base station is disposed, or a satellite ground station of a satellite communication system disposed in the neighboring country.

7. The base station according to any one of claims 1 to 4,
wherein the interference-receiving object is an antenna of a radio-astronomy observation station.

8. A system comprising:
the base station according to any one of claims 1 to 4; and
another base station, a satellite ground station of a satellite communication system, or an antenna of a radio-astronomy observation station, which is an interference-receiving object.

9. A system comprising:
the base station according to any one of claims 1 to 4;
another base station, a satellite ground station of a satellite communication system, or an antenna of a radio-astronomy observation station, which is an interference-receiving object; and
a terminal for communicating with the base station.

10. A method for forming a null of an antenna directivity in a base station that is provided with a multi-element antenna for performing beamforming control using a codebook consisting of a set of plural precoding weight matrices corresponding to plural candidates of beams used for performing a radio communication with a terminal in a cell, and fixedly installed on land or at sea, the method comprising:
determining plural sets of codebook subsets that are grouped by each of sets of plural precoding weight matrices corresponding to plural beams orthogonal to each other, based on the codebook;
selecting, from the plural sets of codebook subsets, a codebook subset consisting of a set of plural precoding weight matrices corresponding to plural beams orthogonal to each other, the plural beams including an interference beam that has a maximum gain in a direction of an interference-receiving object, as the codebook subset to be used for the beamforming control; and
stopping a use of plural beams corresponding to unselected codebook subsets other than the selected codebook subset, and stopping a use of the interference beam among the plural beams corresponding to the selected codebook subset, in the beamforming control.

11. A program executed in a computer or processor provided in a base station that is provided with a multi-element antenna for performing a beamforming control using a codebook consisting of a set of plural precoding weight matrices corresponding to plural candidates of beams used for performing a radio communication with a terminal in a cell, and fixedly installed on land or at sea, the program comprising:
a program code for determining plural sets of codebook subsets that are grouped by each of sets of plural precoding weight matrices corresponding to plural beams orthogonal to each other, based on the codebook;
a program code for selecting, from the plural sets of codebook subsets, a codebook subset consisting of a set of plural precoding weight matrices corresponding to plural beams orthogonal to each other, the plural beams including an interference beam that has a maximum gain in a direction of an interference-receiving object, as the codebook subset to be used for the beamforming control; and
a program code for stopping a use of plural beams corresponding to unselected codebook subsets other than the selected codebook subset, and stopping a use of the interference beam among the plural beams corresponding to the selected codebook subset, in the beamforming control.
